## Europäisches Patentamt

## European Patent Office

## Office européen des brevets

(11) Veröffentlichungsnummer: **0 195 833**

**B1**

(12) # EUROPÄISCHE PATENTSCHRIFT

(45) Veröffentlichungstag der Patentschrift:
21.09.88

(21) Anmeldenummer: 85103485.0

(22) Anmeldetag: 23.03.85

(51) Int. Cl.⁴: **H 01 R 35/00**, B 60 R 21/08

(54) **Lenkrad mit einer elektrischen Zuleitung zu einer in der Lenkradschüssel eines Kraftfahrzeuges angeordneten Gassack-Aufprall-Schutzeinrichtung.**

(43) Veröffentlichungstag der Anmeldung:
01.10.86 Patentblatt 86/40

(45) Bekanntmachung des Hinweises auf die Patenterteilung:
21.09.88 Patentblatt 88/38

(84) Benannte Vertragsstaaten:
**DE FR GB NL SE**

(56) Entgegenhaltungen:
EP-A-0 119 952
DE-A-3 009 109

(73) Patentinhaber: **Petri AG, Bahnweg 1, D-8750 Aschaffenburg (DE)**

(72) Erfinder: **Zeller, Gregor, Jahnstrasse 70, D-8750 Aschaffenburg (DE)**
Erfinder: **Bonn, Helmut, Dörrmorsbacher Strasse 38, D-5781 Haibach (DE)**

(74) Vertreter: **Eyer, Eckhardt Philipp, Dipl.- Ing., Patentanwälte Eyer & Linser Robert- Bosch- Strasse 12a, D-6072 Dreieich (DE)**

## Beschreibung

Die Erfindung betrifft ein Lenkrad mit einer elektrischen Zuleitung zu einer in der Lenkradschüssel eines Kraftfahrzeuges angeordneten Gassack-Aufprall-Schutzeinrichtung, bestehend aus einem im wesentlichen von einem Leiterband gebildeten Stromleiter, der in mehreren konzentrischen Wicklungen in einem die Lenkspindel bezw. Lenkradnabe umgebenden Gehäuse angeordnet und dessen eines Ende in einem an der Lenkradnabe befestigten und mit dem Lenkrad drehenden Kern und dessen anderes Ende in dem gestellfest montierbaren Gehäuse endet.

Die beispielsweise aus der DE-A-3 009 109 bekannt gewordenen Stromleitungsverbinder dieser Art haben sich funktionell gut bewährt, Schwierigkeiten ergeben sich jedoch gelegentlich durch unsachgemäßen Einbau des auf dem Lenkrad vormontierten Stromleitungsverbinders auf dem Hintergrund, daß die Montage der Stromzuführung wegen der Längenbemessung des Spiralbandes auf den bei Lenkrädern üblichen Maximalausschlag von insgesamt etwa sechs Umdrehungen in der Mittelstellung des Spiralbandes bei Einstellung der Fahrzeugräder auf Geradeausfahrt montiert werden müssen. Bei unbeabsichtigtem versehentlichem Verdrehen des Gehäuses gegenüber dem Kern vor der Montage ergibt sich eine einseitige Verkürzung des maximalen Drehwinkels des Lenkrades, die zu Unfallgefährdung Anlaß geben oder zu einem Abriß des Stromverbinders führen kann, durch den die Gassack-Aufprall-Schutzeinrichtung außer Funktion gesetzt wird. Es bedarf somit jeweils vor der Montage des Lenkrades auf der Lenksäule einer sorgfältigen Einzelüberprüfung der Spiralband-Stellung und seiner genauen Justierung in die Mittelstellung. Abgesehen von dem erheblichen durch die Überprüfung begründeten Arbeitsaufwand, sind das Unterbleiben der Überprüfung sowie eine Falscheinstellung durch den Monteur nicht mit Sicherheit auszuschließen.

Der vorliegenden Erfindung liegt als Aufgabe die Schaffung eines Lenkrades mit einem Leitungsverbinder der beschriebenen Art zugrunde, bei dem die Gefahr eines Montagefehlers sowohl bei der Erstmontage als auch bei einer späteren Montage nach gegebenenfalls wartungsbedingtem Ausbau weitestgehend vermindert ist und die Erfindung besteht darin, daß an der Nabe bezw. Spindel eine federbelastete Zweiarmwippe mit winkelig zueinander stehenden Armen angeordnet ist, deren einer Arm in den Hubweg der der Befestigung des Lenkrades auf der Spindel dienenden Mutter einragt, wobei in der Nabe eine im Schwenkbereich dieses Armes liegende Ausnehmung und in dem Gehäuse eine im Schwenkbereich des anderen Armes liegende Ausnehmung vorgesehen sind und die Feder die Wippe in einem gegen das Gehäuse gerichteten Drehsinn beaufschlagt.

Durch die Erfindung ist ein Lenkrad mit einem Leitungsverbinder geschaffen, bei dem eine Fehlmontage praktisch vollständig ausgeschlossen ist dadurch, daß das Gehäuse gegen den Kern bezw, die Lenkradnabe bei der Befestigung des Kerns auf der Lenkradnabe in die richtige Stellung gebracht und in dieser Stellung fixiert wird, wobei die Fixierung erst durch den Montagevorgang selbst gelöst wird, so daß eine unbeabsichtigte Verdrehung des Gehäuses gegenüber der Lenkradnabe bezw. dem an ihr befestigten Kern nicht eintreten kann.

Die Erfindung ist in der Zeichnung beispielsweise veranschaulicht. Es zeigen

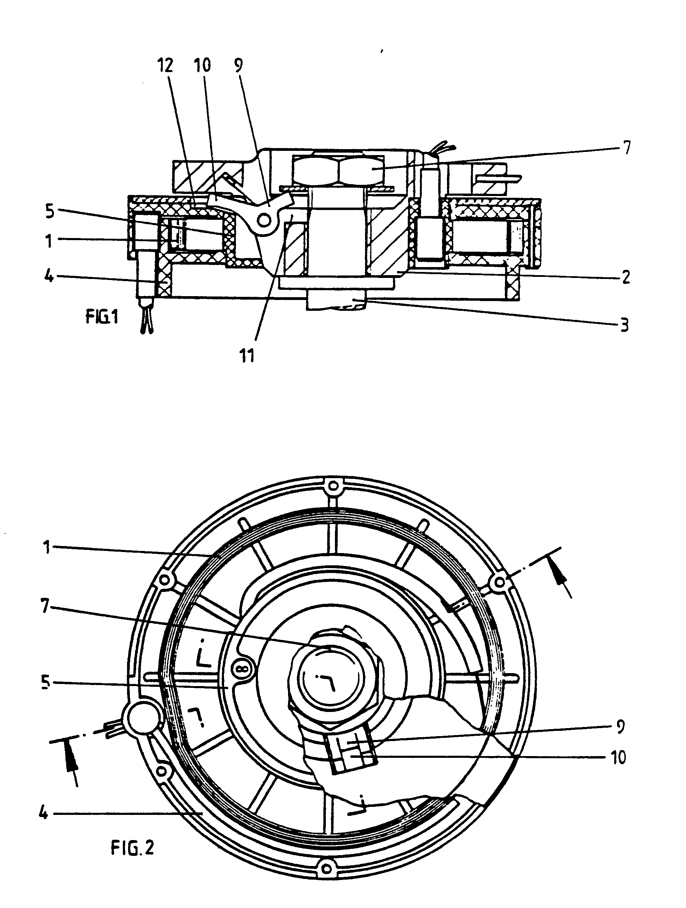

Fig.1 einen Schnitt eine Lenkradnabe mit Stromleitungsverbinder gemäß Erfindung

Fig. 2 eine teilgeschnittene Sicht auf Fig. 1

Das in der Zeichnung wiedergegebene Lenkrad mit einer elektrischen Zuleitung zu einer in der Lenkradschüssel eines Kraftfahrzeuges angeordneten Gassack-Aufprall-Schutzeinrichtung besteht aus einem im wesentlichen von einem Leiterband gebildeten Stromleiter 1, der in mehreren konzentrischen Wicklungen in einem die Lenkradnabe 2 bezw. Lenkspindel 3 umgebenden Gehäuse 4 angeordnet und dessen eines Ende in einem an der Lenkradnabe 2 befestigten und mit dem Lenkrad drehenden Kern 5 und dessen anderes Ende in dem gestellfest montierbaren Gehäuse 4 endet. Das Lenkrad ist mittels der Mutter 7 auf der Lenkspindel 3 befestigt. An der Lenkradnabe 2 ist eine federbelastete Zweiarmwippe mit winkelig zueinander stehenden Armen 9, 10 angeordnet ist, deren einer Arm 9 in den Hubweg der der Befestigung des Lenkrades auf der Spindel 3 dienenden Mutter 7 einragt, wobei in der Lenkradnabe 2 eine im Schwenkbereich dieses Armes 9 liegende Ausnehmung 11 und in dem Gehäuse 4 eine im Schwenkbereich des anderen Armes 10 liegende Ausnehmung 12 vorgesehen sind und die Feder die Wippe 9, 10 in einem gegen das Gehäuse 4 gerichteten Drehsinn beaufschlagt.

Bei der Herstellung des Lenkrades wird der Kern 5 fest auf der Lenkradnabe 2 montiert und nach Justierung des Gehäuses 4 auf die Mittelstellung des Leiterbandes 1 die Einrichtung derart fixiert, daß der Wippenarm 10 zum Einrasten in der Ausnehmung 12 gebracht wird. Es kann nunmehr das Lenkrad nach Einrichtung der Räder auf Geradeausstellung montiert werden wozu das Lenkrad mit seiner Lenkradnabe 2 auf die Spindel 3 aufgesetzt und anschließend mittels der Mutter 7 befestigt wird. Hierbei wird der Wippenarm 9 bis zum Eintritt in die Ausnehmung 11 mitgenommen und hierdurch der Wippenarm 10 außer Eingriff der Ausnehmung 12 geschwenkt, so daß nunmehr der Kern 5 zusammen mit dem Lenkrad gegenüber dem gestellfest montierten Gehäuse im erforderlichen und möglichen Umfang verdreht werden kann ohne Behinderung des Drehweges bezw. Gefahr des Abrisses des Leiters. Entsprechend erfolgt bei der Demontage des Lenkrades nach vorheriger Einstellung der Räder in Geradeausstellung selbsttätig die Justierung und Fixierung des Stromleitungsverbinders in seiner Mittellage.

**Patentanspruch**

Lenkrad mit einer elektrischen Zuleitung zu einer in der Lenkradschüssel eines Kraftfahrzeuges angeordneten Gassack-Aufprall-Schutzeinrichtung, bestehend aus einem im wesentlichen von einem Leiterband gebildeten Stromleiter (1), der in mehreren konzentrischen Wicklungen in einem die Lenkspindel (3) bzw. Lenkradnabe (2) umgebenden Gehäuse angeordnet und dessen eines Ende in einem an der Lenkradnabe befestigten und mit dem Lenkrad drehenden Kern (5) und dessen anderes Ende in dem estellfest montierbaren Gehäuse (4) endet, dadurch gekennzeichnet, daß an der Lenkradabe (2) bzw. Spindel (3) eine federbelastete Zweiarmwippe mit winkelig zueinander stehenden Armen (9, 10) angeordnet ist, deren einer Arm (9) in den Hubweg der der Befestigung des Lenkrades auf der Spindel (3) dienenden Mutter (7) einragt, wobei in der Lenkradnabe (2) eine im Schwenkbereich dieses Armes (9) liegende Ausnehmung (11) und in dem Gehäuse (4) eine im Schwenkbereich des anderen Armes (10) liegende Ausnehmung (12) vorgesehen sind und die Feder die Wippe (9, 10) in einem gegen das Gehäuse (4) gerichteten Drehsinn beaufschlagt.

**Claim**

Steering wheel with an electric supply line to a shock-preventing airbag safety system situated in the steering wheel bowl of a motor vehicle, comprising a current conductor (1), which is formed substantially from a conductor strip and is disposed in a plurality of concentric windings in a housing surrounding the steering wheel column (3), or steering wheel hub (2) respectively, one end of the current conductor terminating in a core (5), which is secured to the steering wheel hub and rotates with the steering wheel, and the other end of the current conductor terminating in the housing (4), which is securely mountable on the frame, characterised in that a spring-loaded two-armed rocker with arms (9, 10), which extend at an angle relative to one another, is disposed on the steering wheel hub (2), or column (3) respectively, one arm (9) protruding into the path of movement of the nut (7), which serves to secure the steering wheel on the column (3), a recess (11) being provided in the steering wheel hub (2) and lying in the pivotal range of this arm (9), and a recess (12) being provided in the housing (4) and lying in the pivotal range of the other arm (10), and the spring acts on the rocker (9, 10) in a direction of rotation directed towards the housing (4).

**Revendication**

Volant comportant une ligne d'alimentation électrique pour un système de protection anti-choc à sac gonflable disposé dans le bol du volant d'un véhicule automobile, se compose d'un conducteur de courant (1) essentiellement constitué par un ruban conducteur qui est disposé en plusieurs spires concentriques dans un boîtier entourant l'axe de direction (3) ou le moyeu de volant (2), conducteur dont l'une des extrémités se termine dans un noyeu central (5) qui est fixé au moyeu de volant et tourne avec le volant, et dont l'autre extrémité se termine dans le boîtier (4) montable en position fixe sur le châssis, caractérise en ce qu' il est monté, sur le moyeu de volant (2) ou sur l'axe de direction (3), une bascule a deux bras sollicitée par ressort dont les bras (9, 10) forment un angle entre eux, bascule dont l'un des bras (9) pénètre dans l'espace décrit par l'écrou (7) qui sert à la fixation du volant sur l'axe de direction (3), un creux (11) situé dans la région de basculement de ce bras (9) étant prévu dans le moyeu de volant (2), un creux (12) situé dans la région de basculement de l'autre bras (10) étant prévu dans le boîtier (4) et le ressort sollicitant la bascule (9, 10) dans le sens de pivotement dirigé vers le boîtier (4).

0 195 833

FIG.1

FIG.2

FIG.1

FIG.2